# EUROPEAN PATENT SPECIFICATION

(11) **EP 3 802 944 B1**
(45) Date of publication and mention of the grant of the patent: **31.05.2023**
(21) Application number: 18731388.7
(22) Date of filing: 08.06.2018
(51) Int. Cl.: D06M 13/298, D06M 15/248, D06M 13/224, D06M 13/292, D06M 11/45, D06M 11/44, C08L 27/06, E01C 21/00, D06M 101/32

(54) **FIRE RESISTANT COATED POLYESTER MINE GRID AND METHOD FOR PRODUCING IT**
FEUERFESTES BESCHICHTETES POLYESTERMINENRASTER UND VERFAHREN ZU SEINER HERSTELLUNG
GRILLE DE MINE EN POLYESTER REVÊTU RÉSISTANTE AU FEU ET PROCÉDÉ POUR SA PRODUCTION

(43) Date of publication of application: 14.04.2021
(73) Proprietor: Saint-Gobain Adfors, 92400 Courbevoie (FR)
(72) Inventor: BOUCHARD, Jonas, 75017 Paris (FR); SANKARANARAYANAN, Jagadis, Chennai 600100 (IN); RATHI, Sahas, Westborough, Massachusetts 01581 (US)
(74) Representative: Saint-Gobain Recherche
(86) International application number: PCT/EP2018/065120
(87) International publication number: WO 2019/233592

(56) References cited:
- DATABASE WPI Week 201173 Thomson Scientific, London, GB; AN 2011-L66118 XP002788988, -& CN 102 153 921 A (SHANDONG YANGGUANG NEW MATERIAL TECHNOLO) 17 August 2011 (2011-08-17)
- DATABASE WPI Week 199825 Thomson Scientific, London, GB; AN 1998-280706 XP002788989, -& JP H10 96170 A (UNITIKA LTD) 14 April 1998 (1998-04-14)
- DATABASE WPI Week 201021 Thomson Scientific, London, GB; AN 2010-C09518 XP002788990, & CN 101 644 164 A (YU G) 10 February 2010 (2010-02-10)
- DATABASE WPI Week 199807 Thomson Scientific, London, GB; AN 1998-072199 XP002788991, & JP H09 310280 A (KYOWA KK) 2 December 1997 (1997-12-02)
- DATABASE WPI Week 201704 Thomson Scientific, London, GB; AN 2016-599602 XP002788992, -& CN 105 924 907 A (JINBAOLI TECHNOLOGY SUZHOU CO LTD) 7 September 2016 (2016-09-07)

## Description

The present invention relates to a fire-resistant wide-meshed grid made of high tenacity polyester fibers coated with a PVC-based coating comprising a particular flame-retardant primary plasticizer. CN 102 153 921 A discloses a PVC-coated grid cloth, the document fails to disclose tris-(2-chloroisopropyl)phosphate (TCPP).

JPH10 96170 A discloses a fire-resistant coated textile comprising a polyester yarn mesh fabric and a plasticized PVC coating, the document fails to disclose TCPP. CN101 644 164 A discloses a textile with a film of PVC placed on it, the document fails to disclose TCPP. JPH09310280A discloses a mesh sheet covered with PVC composition, the document fails to disclose TCPP.

CN105 924 907A discloses a plastic floor comprising PVC and TCPP. Mesh polymer fabrics are used to reinforce long-wall systems in the underground coal mine industry (see for example WO 99/39055, EP 1 584 721 and US 2004/0033337).

The fabrics are made of high tensile polymer yarns woven or knitted together as wide meshed grids or gratings and coated with a protective fire-resistant coating.

Especially for the Australian market, these fabrics have to pass the stringent fire performance standard "MDG 3608 Non-metallic materials for use in underground coal mines" (August 2012). This standard provides guidance on testing methods which can be used for non-metallic materials in underground coal mines, and Appendix C of this standard gives a detailed description of the "One Kilowatt Burner Flame Test". To pass this test the mean persistence time of a flame of each of six test pieces should not exceed 3 seconds.

Compliance to this test is very difficult to achieve at acceptable costs, i.e. at rather low coating weights typically not exceeding about 1.6 times the weight of the uncoated textile.

The present invention is based on the discovery that a particular organophosphate compound (Tris(1-chloro-2-propyl) phosphate (TCPP)) commonly used as flame retardant in polyurethane foams may be used as a primary plasticizer in PVC plastisols and provides the resulting PVC coatings with exceptional fire resistance performances. The inventors have found that TCPP advantageously replaces the more toxic TCEP (Tris(2-chloroethyl) phosphate) which is not REACH compliant.

In order to achieve satisfactory fire-resistance for polymer-based PVC-coated mine grids the use of TCPP alone is however not sufficient. The PVC coating further has to comprise rather high amounts of mineral fillers.

The formulation of PVC plastisols with high amounts of mineral fillers however is rather challenging when it comes to preparing compositions with viscosities which are sufficiently low to allow dip-coating of the polymer meshes.

The use of organic solvents, commonly used to dilute plastisols, is not acceptable for fire-retardant compositions because it reduces the fire resistance of the final coating and product.

The inventors were successful in formulating coating compositions having suitable viscosities, comprised between about 1500 cp and 4500 cp, without using organic solvents. Instead they associated the primary plasticizer TCPP with at least one secondary plasticizer not reducing the final fire resistance.

The inventors thus have developed a PVC-based flame-retardant coating composition which may be applied by dip-coating on polymer based grids and provides the polymer grid, at rather low coating weights, with a fire-resistance that allows the final coated grids to pass the very strict "One Kilowatt Burner Flame Test" of the Australian MDG 3608 standard.

The subject-matter of the present invention is therefore a method of making a fire-resistant mine-grid comprising the following steps :
- providing a poly(vinyl chloride) (PVC) plastisol,
- providing a polyester yarn mesh fabric,
- coating the polyester yarn mesh fabric with the PVC plastisol,
- heating the coated fabric for about 5 to 20 minutes to a temperature comprised between 110 °C and 150 °C so as to effect gelatinization of the PVC plastisol and to form a plasticized PVC coating enveloping the polyester yarns of the mesh fabric,
wherein the PVC plastisol, comprises
(a) a poly(vinyl chloride) base resin,
(b) from 60 to 140 phr of a primary plasticizer which is tris-(2-chloroisopropyl)phosphate (TCPP),
(c) from 40 to 140 phr of a secondary plasticizer,
(d) from 145 to 230 phr of an inorganic filler.

The term "primary plasticizer" as used in the present application refers to an organic compound that has sufficient affinity for the PVC resin so that it is considered compatible with said resin and therefore may be used as the sole plasticizer.

As used in the present application, the term "secondary plasticizer" is an organic compound that has insufficient affinity for the PVC resin for it to be the sole plasticizer, and therefore must be blended with a primary plasticizer.

The acronym "phr" means "Parts per Hundred parts of Resin", the resin being the poly(vinyl chloride) base resin.

The fire-retarding PVC plastisol used in the present invention comprises four essential ingredients, which are
- the PVC base resin,
- a fire-retardant primary plasticizer which is tris-(2-chloroisopropyl)phosphate (TCPP),
- a secondary plasticizer, and
- a significant amount of an inorganic filler.

The PVC base resin may be any poly(vinyl chloride) homopolymer resin prepared by emulsion polymerization or microsuspension polymerization of vinyl chloride.

The PVC base resins are available as free flowing powders.

The particle size of the powder is a parameter to consider because it may influence the viscosity of the plastified plastisol. The PVC base resin preferably has a volume median particle size (D₅₀), measured by laser diffraction using a Malvern Mastersizer 2000, of between 4 and 15 µm, preferably of between 5 and 10 µm. The D₉₀ value preferably is comprised between 20 and 50 µm, more preferably between 25 and 40 µm, the D₁₀ value between 1.0 and 2.0 µm.

The PVC base resin is blended with a combination of a primary and a secondary plasticizer. The primary plasticizer is tris-(2-chloroisopropyl)phosphate (TCPP). It is used in amounts of between 60 to 140 parts per hundred parts of PVC resin (phr), preferably of between 80 to 130 phr. TCPP may be associated with another flame-retardant primary plasticizer which is preferably selected from the group consisting of 2-ethylhexyl diphenyl phosphate (sold for example under the reference Phosflex^{®} 362 by ICL Chemicals) and butylated triphenyl phosphate ester (sold for example under the reference Phosflex 71B by ICL Chemicals). This additional flame-retardant primary plasticizer is preferably used in amounts comprised between 5 to 25 phr.

The secondary plasticizer may be a fire-retardant secondary plasticizer such as chlorinated paraffins, or a non fire-retardant plasticizer such as diisononylphthalate and 2,2,4-trimethylpentanediol-1,3-diisobutyrate, or a mixture thereof. In a preferred embodiment the secondary plasticizer is selected from diisononylphthalate, chlorinated paraffins, and mixtures thereof.

The amount of secondary plasticizer is comprised between about 40 and 140 phr, preferably between about 50 and 130 phr, more preferably between about 55 and 125 phr.

The fourth essential ingredient of the fire retardant plastisol used in the present invention is an inorganic filler.

Such an inorganic filler may me selected from a variety of particulate materials including for example zinc borate, calcium carbonate (CaCO₃), aluminum hydroxide (Al(OH)₃), magnesium hydroxide (Mg(OH)₂), calcium hydroxide (Ca(OH)₂), aluminum phosphates, hydromagnesite (Mg₅(CO₃)₄(OH)₂.4H₂O), hydrotalcite.

These particulate inorganic fillers are selected for their low cost and/or for their flame retardancy. Preferred inorganic fillers are selected from the group consisting of zinc borate, calcium carbonate, aluminum hydroxide, aluminum phosphates and hydrotalcite, and mixtures thereof.

In a preferred embodiment, at least at 60 % by weight of the total inorganic filler is aluminum hydroxide (Al(OH)₃).

The inorganic filler or mixture of inorganic fillers should be present in amounts comprised between about 145 and 230 phr, preferably between about 150 to 200 phr, and even more preferably between about 160 phr and 180 phr.

The polyester yarn forming the polyester yarn mesh fabric preferably is high tenacity polyethylene terephthalate) (PET).

The polyester yarn mesh fabric is preferably warp-knitted and has a mechanical strength (ASTM D6637, method A) of between 100 kN and 1200 kN.

It may comprise a small amount, generally less than about 10 % by weight, of high strength reinforcing fibers selected from the group consisting of high-tenacity polypropylene, high-tenacity polyamide, aramid fibers, glass fibers, and quartz fibers.

In a preferred embodiment of the method of the present invention the coating of the polyester yarn mesh fabric with the PVC plastisol is made by dip coating. Dip coating, when carried out with a coating composition having suitable viscosity, allows formation of a continuous envelope around the flammable polyester fibers. The continuous coating comprising high amounts of inorganic filler forms an efficient thermal barrier between the fire and the polyester and prevents melting and flame drips.

It is important to select the ingredients of the PVC plastisol so as to obtain a coating composition having a viscosity sufficiently high to allow the formation of a thick and efficient thermal barrier around the polyester fibers, and sufficiently low to guarantee good penetration of the coating composition between the polyester yarns and to limit the total coating weight of the resulting final product (coated mine grid).

The Applicant have found that a coating composition (PVC plastisol) having a viscosity of between 1500 cp and 4500 cp, preferably of between 2000 cp and 4000 cp, still more preferably of between 2500 and 3500 cp leads to good results in terms both of flame retardancy and low cost.

The weight ratio of the PVC plastisol coating to the (uncoated) polyester yarn mesh fabric (called hereafter "add-on") is preferably comprised between about 1.00 and 1.60, more preferably between about 1.05 and 1.40, and even more preferably between about 1.10 and 1.30.

The PVC plastisol is applied by dip-coating and the coated polyester mesh fabric is then heated to a temperature sufficiently high to soften the PVC particles, let the hot PVC resin absorb the plasticizers and allow the formation of a continuous flexible PVC film around the yarns of the mesh fabric.

The heating of the coated polyester yarn mesh fabric is preferably carried out by means of hot air.

The heating temperature is generally comprised between about 110 °C and 150 °C, preferably between about 120 °C and 140 °C, and the heating time is generally comprised between about 5 to 20 minutes, preferably between about 5 to 15 minutes.

### Examples

The uncoated polyester fabric used is a knitted fabric having the following characteristics:
Stitching yarn count: 666 dtex
Warp yarn count: 26400 dtex (0 TPM)
Warp yarn tenacity: 5.8 cN/dtex
Number of threads per warp strand: 6
Weft yarn count: 26400 dtex (0 TPM)
Weft yarn tenacity: 5.8 cN/dtex
Number of threads per weft strand: 9
Aperture size (direction warp x weft): 27 mm x 26 mm
Grid size (direction warp x weft): 51 mm x 40 mm
Warp strand width: 14mm
Weft strand width: 24mm
Stitching pattern: tricot

For the coating trials 35 cm long, single ribs were cut in the warp and in the weft direction and used.

To prepare the formulation, all liquid ingredients were first mixed and solid ingredients were then added step by step, under mixing in an overhead shear mixer at 800 rpm. Mixing time was typically fixed to achieve the lowest shear viscosity while ensuring that the temperature did not exceed 38°C.

All warp single rips and weft single rips were individually dipped in the PVC coating composition and excess was squeezed through a two rubber roll coater with a pressure of 3 bar.

**Table 1**

| | | **Example 1 According to the invention** | **Example 2 According to the invention** | **Example 3 According to the invention** | Comparative Example 4 |
|---|---|---|---|---|---|
| Base resin | PVC | 100 | 100 | 100 | 100 |
| Primary plasticizer | TCPP | 100 | 120 | 120 | 120 |
| Flame-retardant secondary plasticizer | Chlorinated paraffins | 40 | 40 | 40 | 40 |
| Non flame-retardant secondary plasticizer | Diisononyl-phthalate | 10 | 10 | 10 | 10 |
| Inorganic particulate filler | Al(OH)₃ | 100 | 100 | 100 | 100 |
| | CaCO₃ | 40 | 100 | 40 | 20 |
| | Zinc borate | 20 | 20 | 20 | 20 |
| | Total | 160 | 220 | 160 | 140 |
| After flame time (sec) | | **2.50** | **2.33** | **3.00** | 3.17 |
| Viscosity (cps) | | 1773 | 3213 | 1607 | 1293 |
| Weft Add-on | | 1.50 | 1.58 | 1.37 | 1.26 |
| Warp Add-on | | 1.45 | 1.64 | 1.35 | 1.16 |

Table 1 shows that only coating compositions according to the invention, comprising TCPP as primary plasticizer and high amounts of inorganic filler, provide the final coated mesh with a sufficient fire resistance (After flame time of 3.00 sec or less).

Before coming to the present invention the inventors had tested several PVC plastisol-based coating compositions containing a primary flame retardant plasticizer (2-ethylhexyl diphenyl phosphate, sold as Phosflex^{®} 362 from ICI Chemicals) which did not result in sufficiently low "after flame times".

The results of a few of these tests are shown in Table 2 below (Comparative Examples 5 - 8)

**Table 2**

| | | Comparative Example 5 | Comparative Example 6 | Comparative Example 7 | Comparative Example 8 |
|---|---|---|---|---|---|
| Base resin | PVC | 100 | 100 | 100 | 100 |
| Primary plasticizer | 2-ethylhexyl diphenyl phosphate (Phosflex^{®} 362) | 60 | 60 | 60 | 60 |
| Flame-retardant secondary plasticizer | Trimethylpentanedio l (TX1B Eastman Chemicals) | 0 | 0 | 5 | 25 |
| Non flame-retardant secondary plasticizer | Diisononyl-phthalate | 5 | 5 | 5 | 5 |
| Inorganic particulate filler | Al(OH)₃ | 0 | 60 | 40 | 40 |
| | CaCO₃ | 0 | 0 | 0 | 0 |
| | Zinc borate | 0 | 6 | 4 | 4 |
| | Total | 0 | 66 | 44 | 44 |
| After flame time (sec) | | **37.6** | **5.67** | **4.67** | **3.33** |
| Viscosity (cps) | | 4633 | 13320 | 3927 | 2013 |
| Add-on | | 1.09 | 1.72 | 1.42 | 1.47 |

## Claims

1. A method of making a fire-resistant wide-meshed grid comprising the following steps :
- providing a poly(vinyl chloride) (PVC) plastisol,
- providing a polyester yarn mesh fabric,
- coating the polyester yarn mesh fabric with the PVC plastisol,
- heating the coated fabric for about 5 to 20 minutes, more preferably for about 5 to 15 minutes, to a temperature comprised between 110 °C and 150 °C, so as to effect gelatinization of the PVC plastisol and form a plasticized PVC coating enveloping the polyester yarns of the mesh fabric,
wherein the PVC plastisol, comprises
(a) a poly(vinyl chloride) base resin,
(b) from 60 to 140 phr of a primary plasticizer which is tris-(2-chloroisopropyl)phosphate (TCPP),
(c) from 40 to 140 phr of a secondary plasticizer,
(d) from 145 to 230 phr of an inorganic filler.

2. The method according to claim 1, wherein the secondary plasticizer is selected from the group consisting of chlorinated paraffins, diisononylphthalate and 2,2,4-trimethylpentanediol-1,3-diisobutyrate, or mixtures thereof.

3. The method according to claim 2, wherein the secondary plasticizer is diisononylphthalate or chlorinated paraffins, or a mixture thereof.

4. The method according to any of the preceding claims, wherein the PVC plastisol further comprises another primary plasticizer selected from the group consisting of 2-ethylhexyl diphenyl phosphate and butylated triphenyl phosphate ester.

5. The method according to any of the preceding claims, wherein the inorganic filler is selected from the group consisting of zinc borate, calcium carbonate, aluminum hydroxide, aluminum phosphinates, hydrotalcite, and mixtures thereof.

6. The method according to any of the preceding claims, wherein the inorganic filler comprises at least 60 % by weight, with respect to the total weight of inorganic filler, of aluminum hydroxide.

7. The method according to any of the preceding claims, wherein the polyester yarn is high tenacity polyethylene terephthalate) (PET).

8. The method according to any of the preceding claims, wherein the polyester yarn mesh fabric is warp-knitted.

9. The method according to claim 8, wherein the warp-knitted polyester yarn mesh fabric has a mechanical strength of between 100 kN and 1200 kN.

10. The method according to any of the preceding claims, wherein the PVC plastisol has a viscosity of between 1500 cp and 4500 cp, preferably of between 2000 cp and 4000 cp, still more preferably of between 2500 and 3500 cp.

11. The method according to any of the preceding claims, wherein the coating of the polyester yarn mesh fabric with PVC plastisol is made by dip coating.

12. The method according to any of the preceding claims, wherein the heating of the coated polyester yarn mesh fabric is made by means of hot air.

13. The method according to any of the preceding claims, wherein the weight ratio of the PVC plastisol coating to the polyester yarn mesh fabric is comprised between 1.00 and 1.60, preferably between 1.05 and 1.40, more preferably between 1.10 and 1.30.

14. The method according to any of the preceding claims, wherein the polyester yarn mesh fabric further comprises less than 10 % by weight of high strength reinforcing fibers selected from the group consisting of high-tenacity polypropylene, high-tenacity polyamide, aramid fibers, glass fibers, and quartz fibers.

15. A fire-resistant wide-meshed grid comprising a polyester yarn mesh fabric and a plasticized PVC coating, made according to a method of any of the preceding claims.

## Patentansprüche

1. Verfahren zum Herstellen eines feuerfesten weitmaschigen Netzes, umfassend die folgenden Schritte:
- Bereitstellen eines Poly(vinylchlorid)plastisols (PVC-Plastisol),
- Bereitstellen eines Polyestergarnmaschengewebes,
- Beschichten des Polyestergarnmaschengewebes mit dem PVC-Plastisol,
- Erhitzen des beschichteten Gewebes etwa 5 bis 20 Minuten lang, mehr bevorzugt etwa 5 bis 15 Minuten lang, auf eine Temperatur, die zwischen 110 °C und 150 °C liegt, um so eine Gelatinierung des PVC-Plastisols zu bewirken und eine plastifizierte PVC-Beschichtung auszubilden, die die Polyestergarne des Maschengewebes umhüllt,
wobei das PVC-Plastisol umfasst
(a) ein Poly(vinylchlorid)-Basisharz,
(b) von 60 bis 140 phr eines primären Weichmachers, der tris-(2-Chlorisopropyl)phosphat (TCPP) ist,
(c) von 40 bis 140 phr eines sekundären Weichmachers,
(d) von 145 bis 230 phr eines anorganischen Füllstoffs.

2. Verfahren nach Anspruch 1, wobei der sekundäre Weichmacher aus der Gruppe ausgewählt ist, bestehend aus chlorierten Paraffinen, Diisononylphthalat und 2,2,4-Trimethylpentandiol-1,3-diisobutyrat oder Mischungen davon.

3. Verfahren nach Anspruch 2, wobei der sekundäre Weichmacher Diisononylphthalat oder chlorierte Paraffine oder eine Mischung davon ist.

4. Verfahren nach einem der vorstehenden Ansprüche, wobei das PVC-Plastisol ferner einen anderen primären Weichmacher umfasst, der aus der Gruppe ausgewählt ist, bestehend aus 2-Ethylhexyldiphenylphosphat und Butyltriphenylphosphatester.

5. Verfahren nach einem der vorstehenden Ansprüche, wobei der anorganische Füllstoff aus der Gruppe ausgewählt ist, bestehend aus Zinkborat, Calciumcarbonat, Aluminiumhydroxid, Aluminiumphosphinaten, Hydrotalcit und Mischungen davon.

6. Verfahren nach einem der vorstehenden Ansprüche, wobei der anorganische Füllstoff mindestens 60 Gew.-%, bezogen auf das Gesamtgewicht des anorganischen Füllstoffs, Aluminiumhydroxid umfasst.

7. Verfahren nach einem der vorstehenden Ansprüche, wobei das Polyestergarn ein hochfestes Poly(ethylenterephthalat) (PET) ist.

8. Verfahren nach einem der vorstehenden Ansprüche, wobei das Polyestergarnmaschengewebe gewirkt ist.

9. Verfahren nach Anspruch 8, wobei das gewirkte Polyestergarnmaschengewebe eine mechanische Festigkeit von zwischen 100 kN und 1200 kN aufweist.

10. Verfahren nach einem der vorstehenden Ansprüche, wobei das PVC-Plastisol eine Viskosität von zwischen 1500 cP und 4500 cP, vorzugsweise zwischen 2000 cP und 4000 cP, noch mehr bevorzugt zwischen 2500 und 3500 cP, aufweist.

11. Verfahren nach einem der vorstehenden Ansprüche, wobei die Beschichtung des Polyestergarnmaschengewebes mit PVC-Plastisol durch Tauchbeschichtung hergestellt wird.

12. Verfahren nach einem der vorstehenden Ansprüche, wobei das Erhitzen des beschichteten Polyestergarnmaschengewebes mittels Heißluft erfolgt.

13. Verfahren nach einem der vorstehenden Ansprüche, wobei das Gewichtsverhältnis der PVC-Plastisol-Beschichtung zu dem Polyestergarnmaschengewebe zwischen 1,00 und 1,60, vorzugsweise zwischen 1,05 und 1,40, mehr bevorzugt zwischen 1,10 und 1,30, liegt.

14. Verfahren nach einem der vorstehenden Ansprüche, wobei das Polyestergarnmaschengewebe ferner weniger als 10 Gew.-% hochfeste Verstärkungsfasern umfasst, die aus der Gruppe ausgewählt sind, bestehend aus hochfestem Polypropylen, hochfestem Polyamid, Aramidfasern, Glasfasern und Quarzfasern.

15. Feuerfestes weitmaschiges Netz, umfassend ein Polyestergarnmaschengewebe und eine plastifizierte PVC-Beschichtung, hergestellt nach einem Verfahren nach einem der vorstehenden Ansprüche.

## Revendications

1. Procédé de fabrication d'une grille à larges mailles, résistante au feu comprenant les étapes suivantes :
- Mise à disposition d'un plastisol de poly(chlorure de vinyle) (PVC),
- Mise à disposition d'une grille textile en fils de polyester,
- Enduction de la grille textile en fils de polyester avec le plastisol de PVC,
- Chauffage de la grille textile enduite pendant environ 5 à 20 minutes, plus préférentiellement pendant environ 5 à 15 minutes, à une température comprise entre 110 °C et 150 °C, de manière à réaliser la gélification du plastisol de PVC et former un revêtement en PVC plastifié enveloppant les fils de polyester de la grille textile,
dans lequel le plastisol de PVC comprend
(a) une résine de base de poly(chlorure de vinyle),
(b) de 60 à 140 parties pour cent parties de résine d'un agent plastifiant primaire qui est le tris-(2-chloro-isopropyl)phosphate (TCPP),
(c) de 40 à 140 parties pour cent parties de résine d'un agent plastifiant secondaire,
(d) de 145 à 230 parties pour cent parties de résine d'une charge minérale.

2. Procédé selon la revendication 1, dans lequel l'agent plastifiant secondaire est choisi dans le groupe constitué de paraffines chlorées, phtalate de diisononyle et 2,2,4-triméthylpentanediol-1,3-diisobutyrate, ou des mélanges de ces composés.

3. Procédé selon la revendication 2, dans lequel l'agent plastifiant secondaire est le phtalate de diisononyle ou les paraffines chlorées, ou un mélange de ces composés.

4. Procédé selon l'une quelconque des revendications précédentes, dans lequel le plastisol de PVC comprend en outre un autre agent plastifiant primaire choisi dans le groupe constitué de phosphate de 2-éthylhexyle et de diphényle et de triphénylphosphate butylé.

5. Procédé selon l'une quelconque des revendications précédentes, dans lequel la charge minérale est choisie dans le groupe constitué de borate de zinc, carbonate de calcium, hydroxyde d'aluminium, phosphinates d'aluminium, hydrotalcite et mélanges de ces composés.

6. Procédé selon l'une quelconque des revendications précédentes, dans lequel la charge minérale comprend au moins 60 % en poids, rapporté au poids total de charge minérale, d'hydroxyde d'aluminium.

7. Procédé selon l'une quelconque des revendications précédentes, dans lequel les fils de polyester sont en poly(éthylène téréphtalate) (PET) haute ténacité.

8. Procédé selon l'une quelconque des revendications précédentes, dans lequel la grille textile en fils de polyester est tricotée en chaîne.

9. Procédé selon la revendication 8, dans lequel la grille textile en fils de polyester tricotée en chaîne présente une résistance mécanique comprise entre 100 kN et 1200 kN.

10. Procédé selon l'une quelconque des revendications précédentes, dans lequel le plastisol de PVC présente une viscosité comprise entre 1500 cm et 4500 cm, de préférence entre 2000 cp et 4000 cp, encore plus préférentiellement entre 2500 et 3500 cp.

11. Procédé selon l'une quelconque des revendications précédentes, dans lequel l'enduction de la grille textile en fils de polyester avec le plastisol de PVC se fait par immersion.

12. Procédé selon l'une quelconque des revendications précédentes, dans lequel le chauffage de la grille textile en fils de polyester enduite se fait au moyen d'air chaud.

13. Procédé selon l'une quelconque des revendications précédentes, dans lequel le rapport en poids du revêtement en plastisol de PVC à la grille textile en fils de polyester est compris entre 1,00 et 1,60, de préférence entre 1,05 et 1,40, plus préférentiellement entre 1,10 et 1,30.

14. Procédé selon l'une quelconque des revendications précédentes, dans lequel la grille textile en fils de polyester comprend en outre moins de 10 % en poids de fibres de renforcement à haute ténacité choisies dans le groupe constitué de polypropylène haute ténacité, polyamide haute ténacité, fibres aramide, fibres de verre et fibres de quartz.

15. Grille à larges mailles, résistante au feu comprenant une grille textile en fils de polyester et un revêtement en PVC plastifié, fabriquée par un procédé selon l'une quelconque des revendications précédentes.
